# EUROPEAN PATENT SPECIFICATION

(11) **EP 4 650 101 B1**
(45) Date of publication and mention of the grant of the patent: **12.08.2026**
(21) Application number: 25170241.1
(22) Date of filing: 14.04.2025
(51) Int. Cl.: B24B 7/18, B25F 5/00, B25F 5/02

(54) **POLE POWER TOOL**
STANGENWERKZEUG
OUTIL ÉLECTRIQUE À PÔLES

(30) Priority: 11.05.2024 CN 202410586339
(43) Date of publication of application: 19.11.2025
(73) Proprietor: Nanjing Chervon Industry Co., Ltd., Nanjing, Jiangsu 211106 (CN)
(72) Inventor: XU, Cong, Nanjing, Jiangsu Province 211106, (CN); DAI, Youjun, Nanjing, Jiangsu Province 211106, (CN)
(74) Representative: Sun, Yiming

(56) References cited:
- EP-B1- 2 196 284
- CN-U- 209 304 229

## Description

### TECHNICAL FIELD

The present application relates to power devices and, in particular, to a pole power tool.

### BACKGROUND

A power tool in the related art may be a pole power tool. The pole power tool includes a grip for a user to hold and an output portion for performing output. The grip and the output portion are connected by a connecting rod.

With a wall sander as an example, the wall sander, also known as a wall grinding machine, wall surface sander, or polisher, includes a work head capable of outputting rotational movement. The work head is in contact with a wall surface and enables the wall surface to be smooth, fine, and flat. The wall sander further includes a power component for driving a grinding head to rotate. In order that the wall sander achieves relatively high sanding efficiency, the power component may adopt a high-voltage brushless electric motor. However, for the existing wall sander, the high-voltage brushless electric motor is generally disposed in the grinding head, while a printed circuit board (PCB) control unit for controlling the high-voltage brushless electric motor is disposed in a handle. Thus, the center of gravity of the wall sander is closer to the grinding head, and the user has relatively poor grip experience. Moreover, the PCB control unit is not easy to dissipate heat, and the high-voltage brushless electric motor generates a relatively large amount of heat, which often lead to a failure to work normally due to an excessive temperature rise. If heat dissipation components are disposed at both the PCB control unit and the high-voltage brushless electric motor, the wall sander is complex in structure and increases in weight, making it inconvenient to achieve the miniaturization of the wall sander.

The power tool in the related art may be a high-voltage brushless power tool that adopts a brushless electric motor and has a power supply that powers the power tool at a relatively high voltage. The high-voltage brushless power tool includes the brushless electric motor and a control assembly, where the control assembly occupies a relatively large space. In some cases, the brushless electric motor and the control assembly are often arranged one before the other along an axis, resulting in a relatively long length of the power tool. In other cases, the brushless electric motor and the control assembly are disposed in two independent housings and spaced relatively far from each other, so as not to affect the sizes of the housings outside the brushless electric motor and the control assembly.

Therefore, a technical problem to be urgently solved is how to provide a power tool with good heat dissipation performance, a compact size, and good grip experience of the user.

CN 209304229 U discloses a pole power tool, specifically a wall grinding machine, comprising a grinding head, a hollow metal operating rod, and a handle. The tool features a brushless motor located in the grinding head and a motor control board that is housed separately in the handle. This separated arrangement aims to protect the control board from dust and utilizes the hollow operating rod to dissipate heat generated by the control board. EP 2 196 284 B1 discloses a handheld long-neck cleaning or grinding machine comprising a tool head, an electric drive motor, and a tubular handle device with a user grip. The document describes a general pole tool structure where the housing for the tool head and the housing for the user's handle are physically separated by a longitudinal tube.

### SUMMARY

A pole power tool according to the present invention is defined in claim 1. Preferred embodiments are defined in the dependent claims.

According to the invention, a grip housing and an output housing are further included, the grip is formed on the grip housing, the output housing is connected to a working attachment for operation, and the grip housing and the output housing are separately provided.

According to the invention, the grip housing is formed with or connected to a first mounting cavity, and the brushless electric motor and the control assembly are mounted in the first mounting cavity.

In some examples, a parting plane P1 is defined, where the parting plane P1 passes through the grip housing, and the grip housing is basically distributed symmetrically about the parting plane P1; a second plane P2 is defined, where the second plane P2 is perpendicular to the parting plane P1 and passes through the motor axis; and a projection of the control assembly on the second plane P2 at least partially overlaps a projection of the brushless electric motor on the second plane P2.

According to the invention, the output housing is formed with a second mounting cavity, and the brushless electric motor and the control assembly are mounted in the second mounting cavity.

According to the invention, a first heat dissipation air path is formed in the pole power tool, the first heat dissipation air path passes through a surface of the control assembly, and the first heat dissipation air path dissipates heat from both the brushless electric motor and the control assembly.

In some examples, the first heat dissipation air path flows through a gap between the brushless electric motor and the control assembly and air gaps of the brushless electric motor and flows out of the brushless electric motor.

In some examples, the pole power tool further includes an electromagnetic interference suppression device configured to suppress electromagnetic interference, disposed in the grip housing or the output housing, and being independent of the control assembly, where a second heat dissipation air path exists, which is configured to dissipate heat from the electromagnetic interference suppression device.

In some examples, the pole power tool further includes a cooling fan connected to the motor shaft of the brushless electric motor, where the grip housing is formed with an air outlet directly facing the cooling fan; the grip housing is formed with a first air inlet directly facing the control assembly; and/or the pole power tool further includes an electromagnetic interference suppression device, and the grip housing is formed with a second air inlet directly facing the electromagnetic interference suppression device.

In some examples, a human-machine interaction structure is formed on the grip housing, and the human-machine interaction structure includes a speed control button for controlling a rotational speed of the motor shaft of the brushless electric motor.

In some examples, the speed control button includes an acceleration button for controlling the motor shaft to increase in speed and a deceleration button for controlling the motor shaft to decrease in speed; and/or the human-machine interaction structure further includes a gear indicator light for indicating a speed gear of the pole power tool.

In some examples, the circuit element includes at least one of an electronic switch, a rectifier, and a first capacitor; the circuit board assembly includes at least one circuit board; multiple electronic switches are provided and arranged in rows and columns on the at least one circuit board; and/or multiple first capacitors are provided and arranged side by side on the at least one circuit board.

In some examples, the pole power tool further includes a cooling fan connected to the motor shaft of the brushless electric motor and an electromagnetic interference suppression device, where the cooling fan is located between the brushless electric motor and the electromagnetic interference suppression device.

In some examples, maximum overload power of the brushless electric motor is greater than or equal to 200 W and less than or equal to 2000 W; and/or the rated power of the brushless electric motor is greater than or equal to 400 W and less than or equal to 2000 W; and/or the outer diameter of the brushless electric motor is greater than or equal to 30 mm and less than or equal to 90 mm; and/or a stack length of stator laminations of the brushless electric motor is greater than or equal to 15 mm and less than or equal to 45 mm; and/or the weight of the brushless electric motor is greater than or equal to 100 g and less than or equal to 800 g.

In some examples, when the motor shaft is horizontally disposed, the control assembly is located above the brushless electric motor, and a heat dissipation gap through which a heat dissipation airflow flows is formed between the control assembly and the brushless electric motor.

The present application has the benefits below.

The power tool provided in the present application includes the grip, the brushless electric motor, and the control assembly, where the grip is for the user to hold, the brushless electric motor includes the motor shaft movable around the motor axis, and the control assembly is configured to control the operation of the brushless electric motor and includes the circuit board assembly and the circuit element. At least the first plane P exists, the first plane P passes through the circuit board assembly of the control assembly and the motor axis of the brushless electric motor, the first plane P intersects the circuit board assembly along the first line segment AB, and the projection of the first line segment AB on the motor axis at least partially falls on the motor shaft. In the power tool, the first plane P intersects the circuit board assembly along the first line segment AB, and the projection of the first line segment AB on the motor axis is restricted to at least partially falling on the motor shaft so that the brushless electric motor and the control assembly are more reasonably arranged, providing the power tool with a compact structure and facilitating heat dissipation for both the brushless electric motor and the control assembly.

### BRIEF DESCRIPTION OF DRAWINGS

FIG. 1 is a schematic view of a power tool.
FIG. 2 is a schematic view of a power tool from another angle.
FIG. 3 is a schematic view of a first mounting cavity, a first heat dissipation air path, and a second heat dissipation air path.
FIG. 4 is a schematic view of a motor housing and a grip housing of a power tool.
FIG. 5 is an exploded view of part of the structure of a power tool.
FIG. 6 is a schematic view of a first plane P, a first line segment AB, and a brushless electric motor.
FIG. 7 is a schematic view of part of the structure of a power tool.
FIG. 8 is a schematic view of a parting plane P1.
FIG. 9 is a schematic view of a second plane P2.
FIG. 10 is a schematic view of a control assembly, an electromagnetic interference suppression device, and a brushless electric motor.
FIG. 11 is a front view of the structure shown in FIG. 10.
FIG. 12 is a top view of the structure shown in FIG. 10.
FIG. 13 is a schematic view of a control assembly.
FIG. 14 is a schematic view of air gaps of a brushless electric motor.
FIG. 15 is a schematic view of a second half housing.
FIG. 16 is a schematic view of an electromagnetic interference suppression device.
FIG. 17 is a schematic view of another power tool.
FIG. 18 is a schematic view of part of the structure of another power tool.
FIG. 19 is a sectional view of part of the structure of another power tool.

### Reference list

- 20: control assembly
- 21: circuit board assembly
- 211: circuit board
- 22: circuit element
- 221: electronic switch
- 222: rectifier
- 223: first capacitor
- 24: control box
- 30: electromagnetic interference suppression device
- 31: electromagnetic interference suppression circuit board
- 32: second capacitor
- 33: resistor
- 34: inductor
- 35: alternating current socket
- 36: mounting box
- 70: grip housing
- 70a: first half housing
- 70b: second half housing
- 701: air outlet
- 702: first air inlet
- 703: second air inlet
- 704: grip
- 705: first mounting cavity
- 706: first heat dissipation air path
- 707: second heat dissipation air path
- 708: air guide rib
- 71: brushless electric motor
- 710: motor housing
- 711: motor shaft
- 712: motor axis
- 713: air gap
- 714: stator lamination
- 72: working attachment
- 73: cooling fan
- 74: human-machine interaction structure
- 741: acceleration button
- 742: deceleration button
- 743: gear indicator light
- 75: first bearing
- 76: second bearing
- 77: output housing
- 81: connecting rod
- 82: flexible hose
- 83: flexible shaft

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

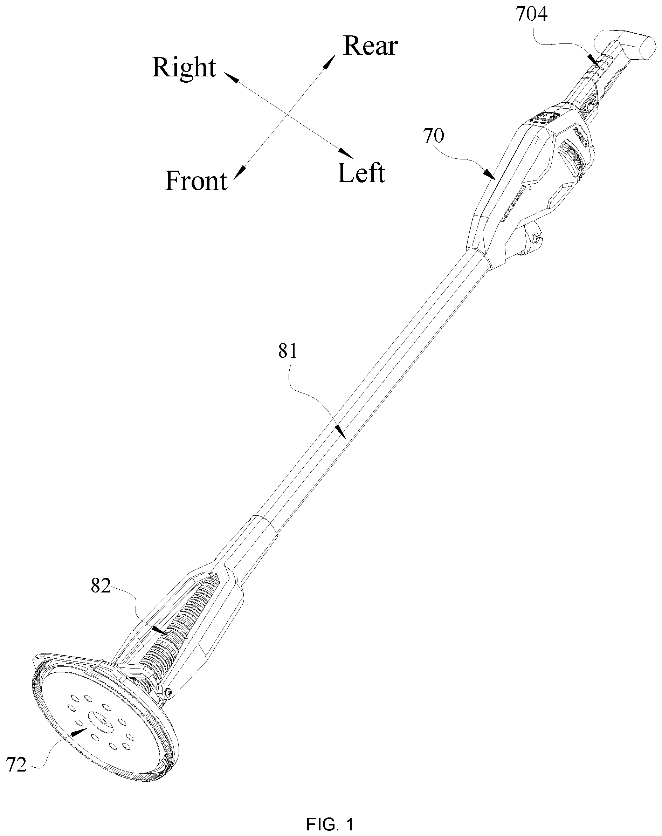

The present application provides a power tool. In some examples, as shown in FIG. 1, the power tool is a grinding tool that uses a grinding disc as a working attachment 72 and thus can perform grinding operation, such as a wall sander, a polisher, a sander, or an angle grinder. Of course, with the wall sander included, the working attachment 72 may be replaced as required. The working attachment 72 may be replaced with a saw blade, cutting disc, cutting rope, drill bit, or screwdriver bit so that the power tool becomes another tool that can perform other operation, such as an impact drill, an electric screwdriver, or an electric cutter.

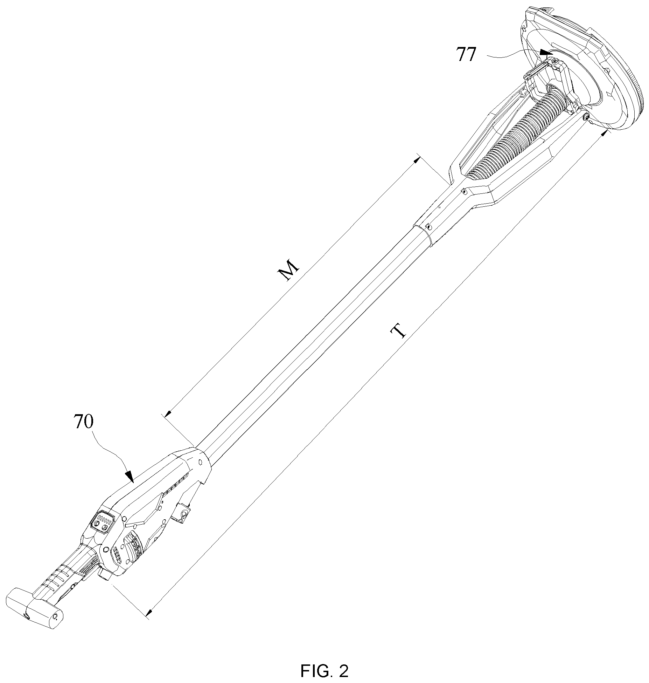

In an example, the power tool may be a handheld power tool. In a parallel example, as shown in FIG. 1, in addition to the working attachment 72, the power tool further includes a grip 704 for a user to hold, a connecting rod 81, and a work head for mounting the working attachment 72 and performing output. The power tool may be a pole power tool where the work head is connected to the grip 704 by the connecting rod 81. In a parallel example, as shown in FIG. 2, in addition to the working attachment 72, the power tool further includes the grip 704 for the user to hold and the work head for mounting the working attachment 72 and performing output. The power tool may be one where the work head and the grip 704 are separately disposed.

In an example, the shortest linear distance T between the working attachment 72 mounted to the work head and the grip 704 is greater than or equal to 50 cm. In an example, the shortest linear distance T between the working attachment 72 mounted to the work head and the grip 704 is greater than or equal to 60 cm. In an example, the shortest linear distance T between the working attachment 72 mounted to the work head and the grip 704 is greater than or equal to 70 cm. In an example, the shortest linear distance T between the working attachment 72 mounted to the work head and the grip 704 is greater than or equal to 80 cm. In an example, the shortest linear distance T between the working attachment 72 mounted to the work head and the grip 704 is greater than or equal to 90 cm. In an example, the shortest linear distance T between the working attachment 72 mounted to the work head and the grip 704 is greater than or equal to 100 cm.

In an example, the length M of the connecting rod 81 of the power tool is greater than or equal to 20 cm. In an example, the length M of the connecting rod 81 of the power tool is greater than or equal to 30 cm. In an example, the length M of the connecting rod 81 of the power tool is greater than or equal to 40 cm. In an example, the length M of the connecting rod 81 of the power tool is greater than or equal to 50 cm. In an example, the length M of the connecting rod 81 of the power tool is greater than or equal to 60 cm. In an example, the length M of the connecting rod 81 of the power tool is greater than or equal to 70 cm. In an example, the length M of the connecting rod 81 of the power tool is greater than or equal to 80 cm. In an example, the length M of the connecting rod 81 of the power tool is greater than or equal to 90 cm. In an example, the length M of the connecting rod 81 of the power tool is greater than or equal to 100 cm.

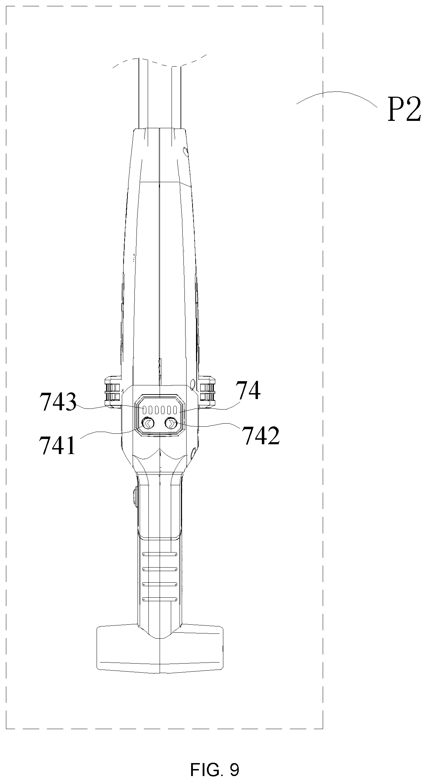

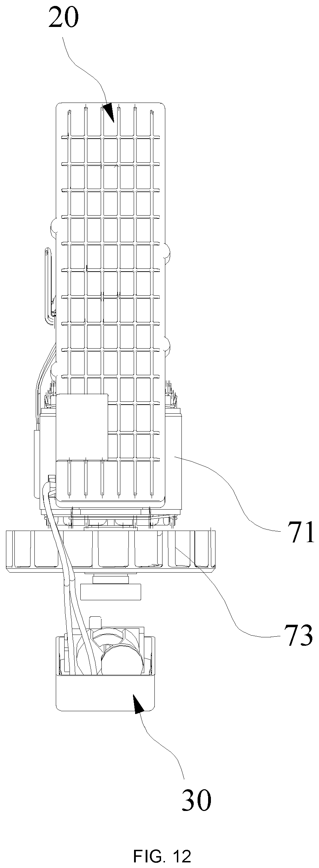

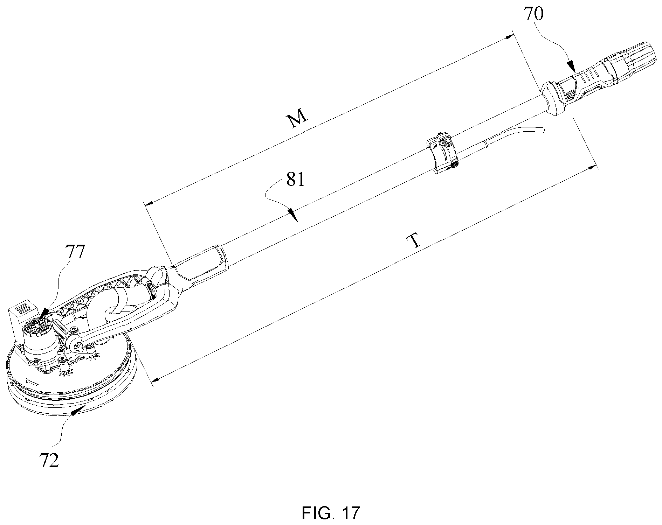

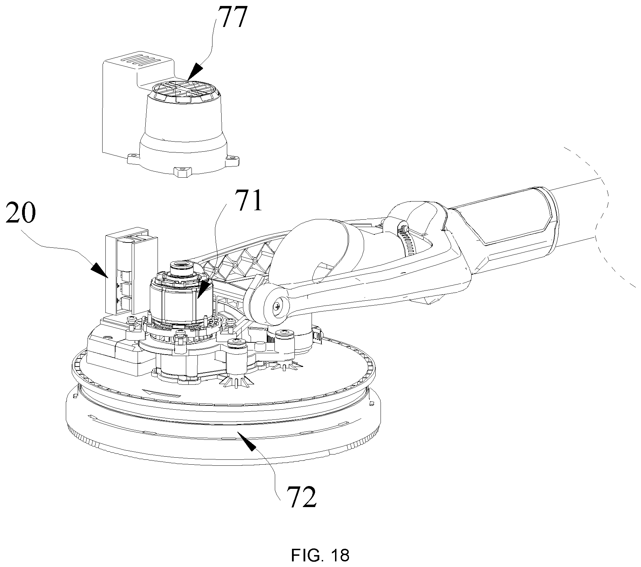

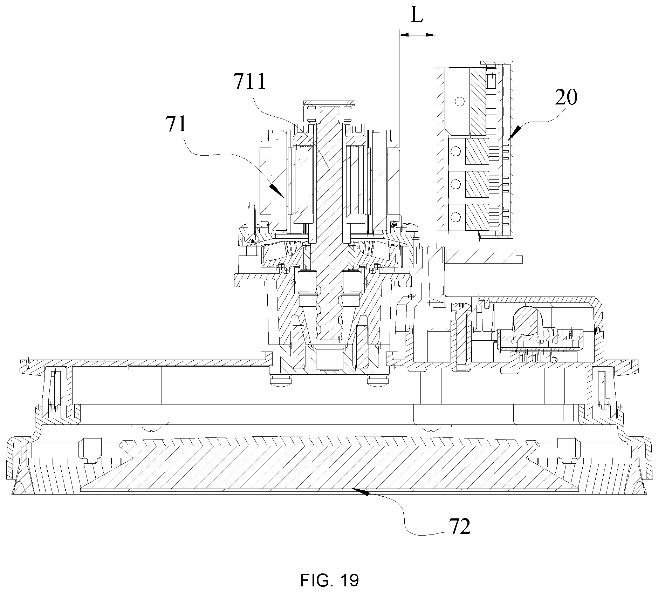

Hereinafter, with reference to FIGS. 1 to 19, other structures of the power tool are described in detail by using the wall sander as an example, where the wall sander uses a grinding head as the working attachment 72 and has the connecting rod 81 and the grip 704.

The power tool further includes a flexible hose 82. One end of the flexible hose 82 is connected to the grinding head, and the other end of the flexible hose 82 forms a dust outlet. Dust generated in the grinding process of the grinding head can be absorbed by the flexible hose 82 and eventually discharged from the dust outlet. In an example, to improve the structural compactness and aesthetics of the power tool, the connecting rod 81 is configured to be a hollow structure, and the flexible hose 82 penetrates through the connecting rod 81. The structure of the working attachment 72 belongs to the existing art and is not described in detail here.

The power tool further includes a body structure, and the body structure includes a grip housing 70, a brushless electric motor 71, and a control assembly 20. The grip housing 70 is a main exterior part of the power tool, and the grip 704 is formed on the grip housing 70 and used for the user to hold.

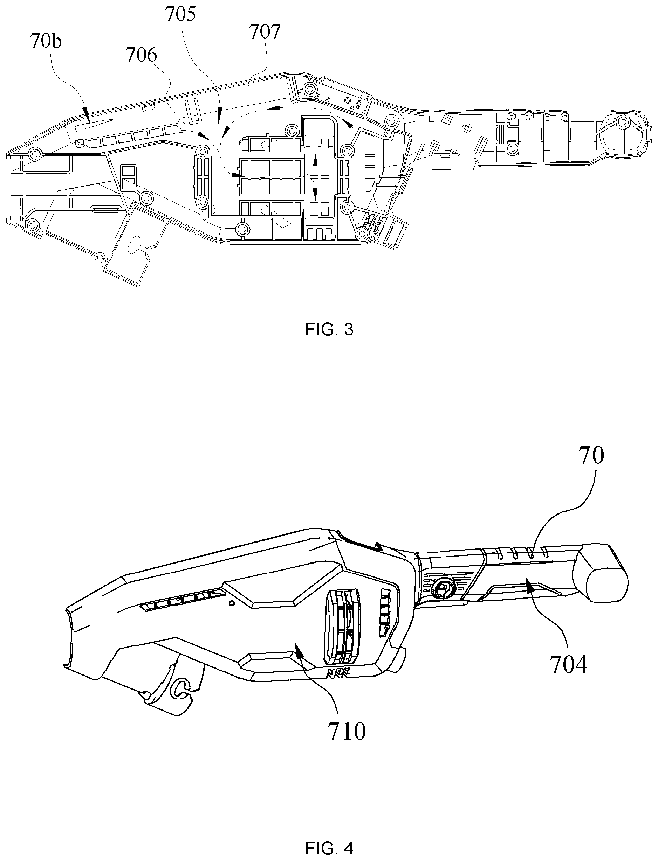

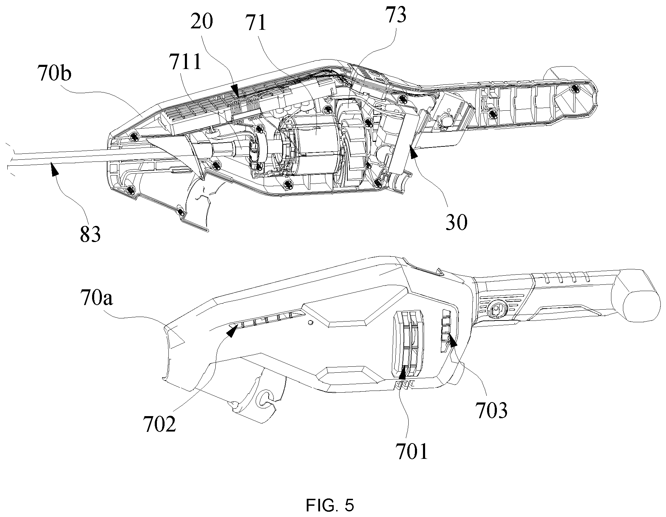

In some examples, with reference to FIGS. 2 and 3, in addition to the grip 704, the grip housing 70 is further formed with a first mounting cavity 705 for mounting the brushless electric motor 71 and the control assembly 20. With reference to FIG. 5, in some examples, the grip housing 70 includes a first half housing 70a and a second half housing 70b. The first half housing 70a and the second half housing 70b may be an integrally formed part or a structure formed by splicing multiple parts. The first half housing 70a and the second half housing 70b may be arranged side by side in a left and right direction of the power tool or may be arranged side by side in an up and down direction or a front and rear direction of the power tool. Part of the inner wall surface of the first half housing 70a and part of the inner wall surface of the second half housing 70b are spliced to form the first mounting cavity 705, and the control assembly 20 and the brushless electric motor 71 are mounted between the first half housing 70a and the second half housing 70b. In an example, in the front and rear direction of the power tool, the grip 704 is formed on the rear side of the first mounting cavity 705. In an example, the grip 704 is provided with an anti-slip structure to improve the stability with which the user holds the grip 704, where the anti-slip structure may be an anti-slip rubber sleeve or an anti-slip texture.

In some parallel examples, as shown in FIG. 4, the body structure further includes a motor housing 710, and the motor housing 710 is connected to the grip housing 70. The grip housing 70 only has a function of forming the grip 704, while the motor housing 710 is formed with the first mounting cavity 705 for mounting the brushless electric motor 71 and the control assembly 20. That is to say, the grip housing 70 may be directly formed with the first mounting cavity 705 or may be connected to the motor housing 710 formed with the first mounting cavity 705. In an example, the motor housing 710 and the grip housing 70 are integrally formed. In another example, the motor housing 710 and the grip housing 70 are separately formed and then connected to each other.

Of course, the brushless electric motor 71 and the control assembly 20 may be mounted in the first mounting cavity 705 or mounted in a second mounting cavity formed by another component. In some examples, the power tool further includes an output housing 77, the output housing 77 is connected to the working attachment 72 for performing operation, and the second mounting cavity is formed in the output housing 77. In this manner, the brushless electric motor 71 and the control assembly 20 are disposed close to the working attachment 72, which not only helps lower the center of gravity of the power tool and reduce the workload of the user but also can improve the stability with which the power tool leans against a wall to be stored. In an example, the grip housing 70 and the output housing 77 are separately disposed.

When the brushless electric motor 71 is disposed in the output housing 77, since the output housing 77 is directly connected to the working attachment 72, a motor shaft 711 of the brushless electric motor 71 may be directly connected to the working attachment 72 and drive the working attachment 72 to move. Of course, in addition to the direct connection, a reduction assembly may be disposed between the motor shaft 711 and the working attachment 72. The reduction assembly may be a reduction gearbox, and the rotational speed output by the motor shaft 711 of the brushless electric motor 71 is reduced by the reduction assembly before driving the working attachment 72. When the brushless electric motor 71 is disposed in the grip housing 70, since the grip housing 70 is relatively far from the working attachment 72, the motor shaft 711 of the brushless electric motor 71 may be connected to the working attachment 72 by a flexible shaft 83, as shown in FIG. 5.

The brushless electric motor 71 is a power component of the power tool. The brushless electric motor 71 includes the motor shaft 711 capable of outputting rotational movement, the motor shaft 711 is supported by a first bearing 75 and a second bearing 76 and can move around a motor axis 712, and the motor axis 712 is an axis of rotation of the motor shaft 711. The control assembly 20 is configured to control the operation of the brushless electric motor 71. The control assembly 20 includes a control box 24 and a circuit board assembly 21 and a circuit element 22 located in the control box 24. It is to be noted that the motor axis 712 mentioned in the present application refers to a straight line extending infinitely towards two ends.

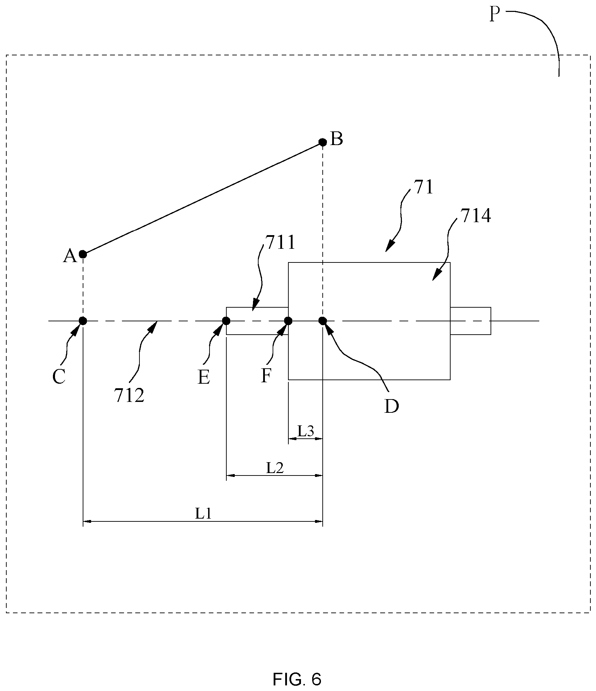

With reference to FIG. 6, at least a first plane P exists, the first plane P passes through the circuit board assembly 21 of the control assembly 20 and the motor axis 712 of the brushless electric motor 71, the first plane P intersects the circuit board assembly 21 along a first line segment AB, and a projection of the first line segment AB on the motor axis 712 at least partially falls on the motor shaft 711. Compared with the existing art in which the brushless electric motor and the control assembly are arranged one before the other along an axis, the examples of the present application provide the power tool where the first plane P intersects the circuit board assembly 21 along the first line segment AB, and the projection of the first line segment AB on the motor axis 712 is restricted to at least partially falling on the motor shaft 711 so that the brushless electric motor 71 and the control assembly 20 are more reasonably arranged, providing the power tool with a compact structure and facilitating heat dissipation for both the brushless electric motor 71 and the control assembly 20. In an example, the projection of the first line segment AB on the motor axis 712 partially falls on the motor shaft 711. In another example, the projection of the first line segment AB on the motor axis 712 entirely falls on the motor shaft 711.

With continued reference to FIG. 6, two endpoints of the first line segment AB are a first end A and a second end B, respectively, a projection of the first end A on the motor axis 712 is a first projection point C, a projection of the second end B on the motor axis 712 is a second projection point D, a line connecting the first projection point C and the second projection point D is a second line segment CD, and the second line segment CD has a first length L1. The center point of an end of the motor shaft 711 falling within the second line segment CD is a third end E, and the distance ED between the third end E and the second projection point D is a second length L2. It is to be noted that the third end may also be defined as a third projection point E at which the second line segment CD intersects an endpoint of the motor shaft 711.

The ratio of the second length L2 to the first length L1 is defined as a first overlap rate R1. In an example, the first overlap rate R1 is greater than or equal to 40%. In an example, the first overlap rate R1 is greater than or equal to 20%. In an example, the first overlap rate R1 is greater than or equal to 50%. In an example, the first overlap rate R1 is greater than or equal to 60%. In an example, the first overlap rate R1 is greater than or equal to 70%. In an example, the first overlap rate R1 is greater than or equal to 80%. In an example, the first overlap rate R1 is 100%.

With continued reference to FIG. 6, the center point of an end of stator laminations 714 of the brushless electric motor 71 falling within the second line segment CD is a fourth end F, and the distance FD between the fourth end F and the second projection point D is a third length L3.

The ratio of the third length L3 to the first length L1 is defined as a second overlap rate R2. In an example, the second overlap rate R2 is greater than or equal to 20%. In an example, the second overlap rate R2 is greater than or equal to 50%. In an example, the second overlap rate R2 is greater than or equal to 60%. In an example, the second overlap rate R2 is greater than or equal to 70%. In an example, the second overlap rate R2 is greater than or equal to 80%. In an example, the second overlap rate R2 is 100%.

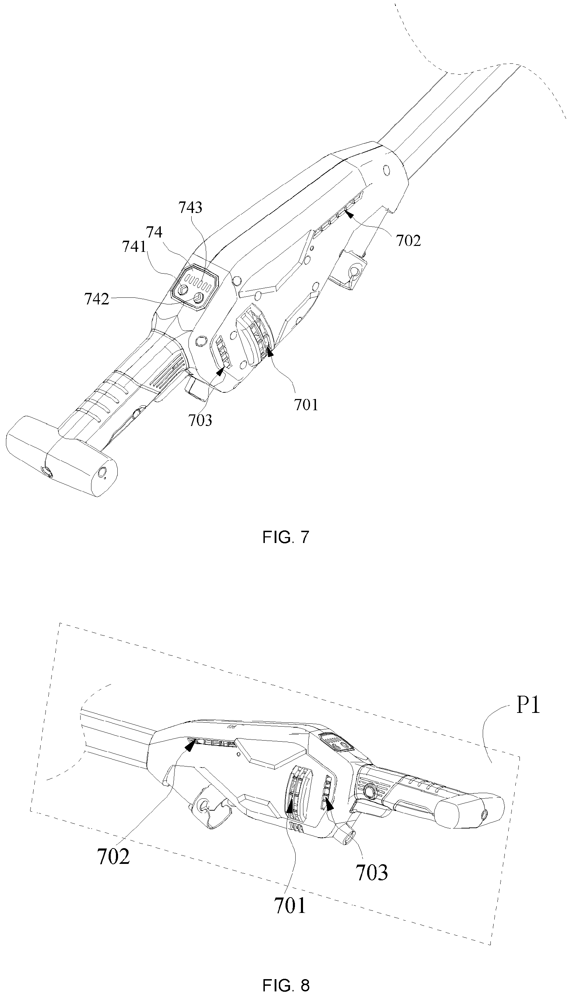

With reference to FIGS. 7 to 12, a plane is defined as a parting plane P1, the parting plane P1 passes through the grip housing 70, and the grip housing 70 is basically distributed symmetrically about the parting plane P1; a plane is defined as a second plane P2, the second plane P2 is perpendicular to the parting plane P1 and passes through the motor axis 712, and a projection of the control assembly 20 on the second plane P2 at least partially overlaps a projection of the brushless electric motor 71 on the second plane P2.

In the power tool, the brushless electric motor 71 and the control assembly 20 are both mounted in the first mounting cavity 705 of the grip housing 70 or the motor housing 710 so that the brushless electric motor 71 and the control assembly 20 are concentrated. Compared with the existing art in which an electric motor is disposed close to a grinding head of a tile sander, the examples of the present application concentrate the brushless electric motor 71 and the control assembly 20 in the first mounting cavity 705 of the grip housing 70 or the motor housing 710 so that the center of gravity of the power tool is closer to the grip 704, helping improve the grip experience of the user. Moreover, the projection of the control assembly 20 on the second plane P2 is restricted to at least partially overlapping the projection of the brushless electric motor 71 on the second plane P2 so that the power tool is compact in structure, and the heat dissipation for both the brushless electric motor 71 and the control assembly 20 is facilitated, thereby improving the heat dissipation effect and facilitating a further improvement in the structural compactness of the power tool.

To reflect a degree of overlapping between the control assembly 20 and the brushless electric motor 71, the ratio of the area of an overlap between the control assembly 20 and the brushless electric motor 71 to the total area of the control assembly 20 is defined as an overlap rate. In some examples, the overlap rate is greater than or equal to 10%. In an example, the overlap rate is 10%. In an example, the overlap rate is 20%. In an example, the overlap rate is 30%. In an example, the overlap rate is 40%. In an example, the overlap rate is 50%. In an example, the overlap rate is 60%.

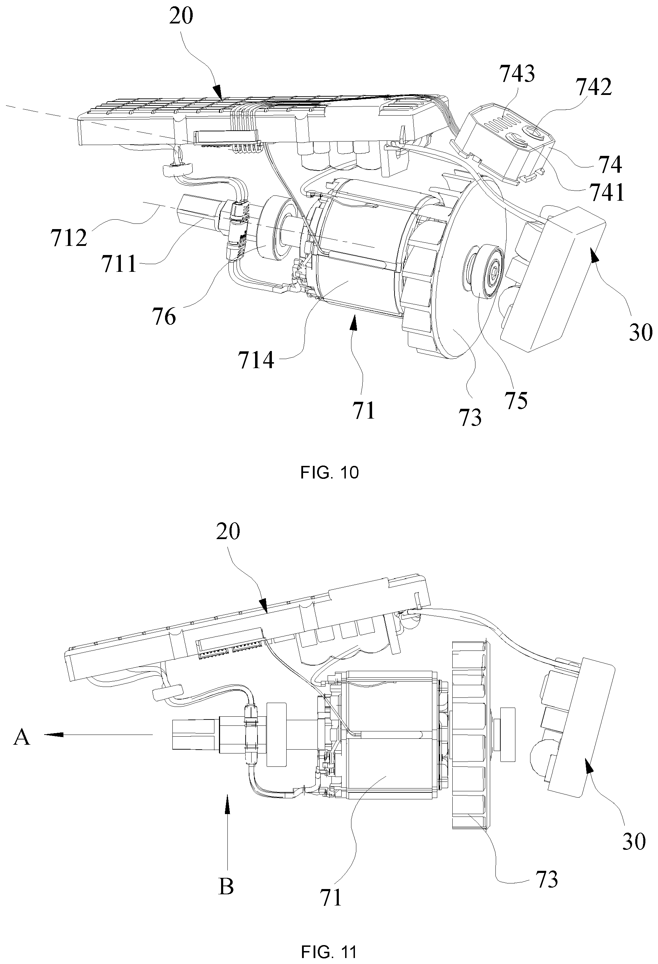

In some examples, when observed from a direction A shown in FIG. 11, the control assembly 20 at least partially overlaps the brushless electric motor 71. In some examples, when observed from a direction B shown in FIG. 11, the control assembly 20 at least partially overlaps the brushless electric motor 71. In some examples, no matter when observed from the direction A or the direction B shown in FIG. 11, the control assembly 20 at least partially overlaps the brushless electric motor 71.

As the power component of the power tool, the brushless electric motor 71 has the advantages of high efficiency, small volume, high durability, low electrical noise, stable operation, wide speed regulation range, low interference, smooth speed variation, high control accuracy, and so on.

In some examples, maximum overload power of the brushless electric motor 71 is greater than or equal to 200 W and less than or equal to 2000 W. In an example, the maximum overload power of the brushless electric motor 71 is 200 W. In an example, the maximum overload power of the brushless electric motor 71 is 750 W. In an example, the maximum overload power of the brushless electric motor 71 is 1000 W.

**In** some examples, the rated power of the brushless electric motor 71 is greater than or equal to 400 W and less than or equal to 2000 W. In an example, the rated power of the brushless electric motor 71 is 800 W. In an example, the rated power of the brushless electric motor 71 is 1000 W. In an example, the rated power of the brushless electric motor 71 is 1200 W.

In some examples, the outer diameter of the brushless electric motor 71 is greater than or equal to 30 mm and less than or equal to 90 mm. In an example, the outer diameter of the brushless electric motor 71 is 45 mm. In an example, the outer diameter of the brushless electric motor 71 is 55 mm. In an example, the outer diameter of the brushless electric motor 71 is 65 mm. In an example, the outer diameter of the brushless electric motor 71 is 70 mm.

In some examples, a stack length of the stator laminations 714 of the brushless electric motor 71 is greater than or equal to 15 mm and less than or equal to 45 mm. In an example, the stack length of the stator laminations 714 of the brushless electric motor 71 is 30 mm. In an example, the stack length of the stator laminations 714 of the brushless electric motor 71 is 35 mm. In an example, the stack length of the stator laminations 714 of the brushless electric motor 71 is 40 mm.

In some examples, the weight of the brushless electric motor 71 is greater than or equal to 100 g and less than or equal to 800 g. In an example, the weight of the brushless electric motor 71 is 250 g. In an example, the weight of the brushless electric motor 71 is 300 g. In an example, the weight of the brushless electric motor 71 is 350 g. In an example, the weight of the brushless electric motor 71 is 400 g. In an example, the weight of the brushless electric motor 71 is 450 g. In an example, the weight of the brushless electric motor 71 is 500 g.

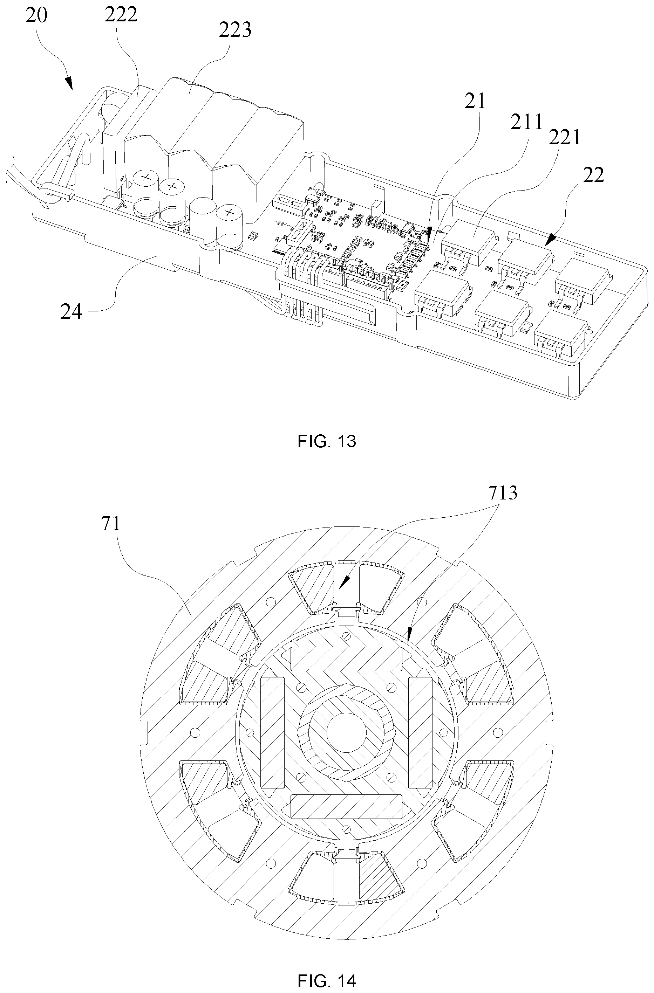

As shown in FIG. 13, the control assembly 20 is configured to control the brushless electric motor 71. In some examples, the circuit board assembly 21 includes at least one circuit board 211, and the circuit element 22 is integrated onto the circuit board 211. In some examples, according to a shape and size of the first mounting cavity 705, the circuit board 211 is arranged at an angle relative to the direction of the axis of the motor shaft 711. In an example, the angle is an acute angle. In an example, the angle is a right angle, that is, the circuit board 211 is perpendicular to the direction of the axis of the motor shaft 711.

In some examples, the circuit board assembly 21 includes two circuit boards 211, and the two circuit boards are a first circuit board and a second circuit board that are electrically connected to each other, where the first circuit board and the second circuit board are basically parallel to each other. When observed from a direction perpendicular to the first circuit board, the first circuit board at least partially overlaps the second circuit board, and the area of the first circuit board is greater than or equal to that of the second circuit board. The two circuit boards are disposed so that different types of circuit elements 22 can be electrically connected on different circuit boards 211, reducing a space occupied by the control assembly 20 and facilitating the miniaturization of the power tool.

In some examples, the circuit element 22 includes at least one of an electronic switch 221, a rectifier 222, and a first capacitor 223. In an example, the circuit element 22 includes the electronic switch 221, the rectifier 222, and the first capacitor 223, where the electronic switch 221, the rectifier 222, and the first capacitor 223 are all integrated onto one circuit board 211.

In some examples, multiple electronic switches 221 are provided and arranged in rows and columns on the circuit board 211. The multiple electronic switches 221 are configured to drive the brushless electric motor 71 to operate. Specifically, the multiple electronic switches 221 constitute a three-phase bridge circuit. The rectifier 222 constitutes a direct current unit for receiving an alternating current input from an alternating current input line and outputting a direct current bus voltage, that is, converting the alternating current input from the alternating current input line into a pulsating direct current for output. The circuit element 22 further includes a control module configured to control on states of the multiple electronic switches 221 to drive the brushless electric motor 71 to operate normally. In some examples, the control module adopts a control chip to implement the function.

In some examples, the electronic switches 221 are perpendicular to the circuit board 211. In some examples, the electronic switches 221 are insulated-gate bipolar transistors (IGBTs). In some examples, the electronic switches 221 are metal-oxide-semiconductors (MOSs). In some examples, the electronic switches 221 are field-effect transistors (FETs).

In some examples, the multiple electronic switches 221 are arranged regularly on the circuit board 211, for example, arranged in rows and columns or arranged in circles. In an example, six electronic switches 221 are provided, and the six electronic switches 221 are arranged in two rows and three columns.

The first capacitor 223 is a thin-film capacitor. In some examples, multiple first capacitors 223 are provided and arranged side by side on the circuit board 211. In an example, three first capacitors 223 are provided, and the three first capacitors 223 are arranged in one row and disposed side by side with the six electronic switches 221 along a length direction of the circuit board 211. The rectifier 222 and the three first capacitors 223 are arranged side by side along the length direction of the circuit board 211. Of course, in other examples, the number of electronic switches 221 and the number of first capacitors 223 may be flexibly adjusted as required.

In some examples, the control assembly 20 further includes the control box 24. The control box 24 is used for mounting the circuit board assembly 21 and the circuit element 22 so that the control assembly 20 is integrated into a whole, facilitating assembly. The specific assembly process is as follows: the circuit board assembly 21 and the circuit element 22 are integrated together, and then the integrated unit is placed into the control box 24 and sealed and fixed through poured glue, which can achieve not only insulation but also certain heat dissipation.

The control box 24 is a box-shaped structure with the top open. In an example, the control box 24 is rectangular. Of course, in other examples, a shape of the control box 24 may be adjusted according to the shape of the cavity in the housing and the size of the internal space of the housing.

With continued reference to FIGS. 7 to 10, a human-machine interaction structure 74 is formed on the grip housing 70, and the human-machine interaction structure 74 includes a speed control button for controlling the rotational speed of the motor shaft 711 of the brushless electric motor 71. The speed control button is triggered so that the rotational speed of the brushless electric motor 71 can be changed, and thus the working attachment 72 works at different speeds. When the working attachment 72 is the grinding head, the grinding head can grind the wall at different grinding speeds.

In some examples, two speed control buttons are provided, which are an acceleration button 741 for controlling the motor shaft 711 to increase in speed and a deceleration button 742 for controlling the motor shaft 711 to decrease in speed, respectively. In some examples, one speed control button is provided, which is the acceleration button 741. The power tool is started in a lowest speed gear, and the acceleration button 741 is triggered so that the power tool switches sequentially to a higher speed gear. When the power tool reaches a highest speed gear, the acceleration button 741 is triggered again so that the power tool directly switches to the lowest speed gear. The cycle is repeated, thus forming a control loop. Of course, in some parallel examples, one speed control button is provided, which is the deceleration button 742. The power tool is started in the highest gear, and the acceleration button 742 is triggered so that the power tool switches sequentially to a lower speed gear. When the power tool reaches the lowest speed gear, the acceleration button 742 is triggered again so that the power tool directly switches to the highest speed gear. The cycle is repeated, thus forming a control loop.

In some examples, the human-machine interaction structure 74 further includes a gear indicator light 743 for indicating a speed gear of the power tool. In an example, the number of gear indicator lights 743 is the same as the number of speed gears of the power tool, and each gear indicator light 743 corresponds to one speed gear. A certain gear indicator light 743 is turned on to indicate the speed gear of the power tool. In a parallel example, the number of gear indicator lights 743 is the same as the number of speed gears of the power tool, and a target number of gear indicator lights 743 are turned on to indicate the speed gear of the power tool. For example, when the power tool is in the lowest speed gear (gear 1), one gear indicator light 743 is turned on; when the power tool is in the highest speed gear (gear 6), six gear indicator lights 743 are turned on.

To utilize natural wind to dissipate heat from both the brushless electric motor 71 and the control assembly 20, with continued reference to FIG. 3, a first heat dissipation air path 706 is formed in the first mounting cavity 705, the first heat dissipation air path 706 passes through a surface of the control assembly 20, and the first heat dissipation air path 706 dissipates heat from both the brushless electric motor 71 and the control assembly 20. This setting can ensure that the brushless electric motor 71 and the control assembly 20 both have relatively good heat dissipation effects and avoid additional heat sinks so that the power tool does not increase in cost and weight. It is to be noted that when the brushless electric motor 71 and the control assembly 20 are disposed in the output housing 77, the first heat dissipation air path 706 may be provided in the second mounting cavity.

In some examples, the first heat dissipation air path 706 flows through a gap between the brushless electric motor 71 and the control assembly 20 and air gaps 713 of the brushless electric motor 71 and flows out of the brushless electric motor 71. Thus, a heat dissipation airflow can pass through the inside of the brushless electric motor 71, achieving a better heat dissipation effect. It is to be noted that, as shown in FIG. 14, the air gaps 713 here include not only air gaps 713 formed by windings of the brushless electric motor 71 but also an air gap 713 formed between a stator and a rotor of the brushless electric motor 71.

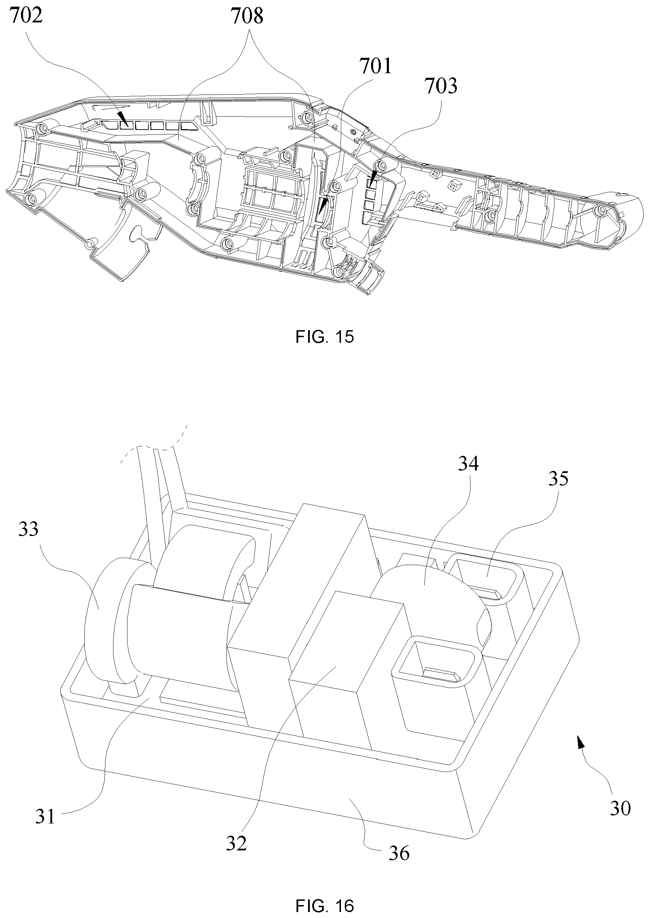

To form an inlet and an outlet of the first heat dissipation air path 706 to enable air to flow into and out of the first mounting cavity 705 or the second mounting cavity, as shown in FIGS. 3 and 15, the grip housing 70 is provided with a first air inlet 702 and an air outlet 701, the first air inlet 702 serves as the inlet of the first heat dissipation air path 706, and the air outlet 701 serves as the outlet of the first heat dissipation air path 706. Of course, when the first heat dissipation air path 706 is formed in the motor housing 710 or the output housing 77, the first air inlet 702 and the air outlet 701 may be provided on the motor housing 710 or the output housing 77.

In some examples, with continued reference to FIGS. 10 and 11, the power tool further includes a cooling fan 73, the cooling fan 73 is connected to the motor shaft 711 of the brushless electric motor 71, and the rotation of the cooling fan 73 can generate negative pressure to cause the heat dissipation airflow to be formed in the first heat dissipation air path 706.

In some examples, the grip housing 70 is provided with the first air inlet 702 directly facing the control assembly 20, and the grip housing 70 is provided with the air outlet 701 directly facing the cooling fan 73. In some examples, multiple first air inlets 702 are provided and arranged side by side to increase an air intake volume. In some examples, multiple air outlets 701 are provided and arranged side by side to increase an air exhaust volume.

In an example, two sets of air outlets 701 are provided, the two sets of air outlets 701 are provided on the left side and the right side of the power tool, respectively, and each set of air outlets 701 includes at least one air outlet 701. In an example, two sets of first air inlets 702 are provided on the left side and the right side of the power tool, respectively, and each set of first air inlets 702 includes at least one first air inlet 702.

In some examples, when the motor shaft 711 is horizontally disposed, the control assembly 20 is located above the brushless electric motor 71, and a heat dissipation gap through which the heat dissipation airflow flows is formed between the control assembly 20 and the brushless electric motor 71.

With continued reference to FIGS. 5 and 10 to 12, the power tool further includes an electromagnetic interference suppression device 30 configured to suppress electromagnetic interference.

As shown in FIG. 16, the electromagnetic interference suppression device 30 includes an electromagnetic interference suppression circuit board 31, a second capacitor 32, a resistor 33, an inductor 34, an alternating current socket 35, and a mounting box 36, where the second capacitor 32, the resistor 33, the inductor 34, and the alternating current socket 35 are all integrated onto the electromagnetic interference suppression circuit board 31. The electromagnetic interference suppression circuit board 31, the second capacitor 32, the resistor 33, the inductor 34, and the alternating current socket 35 are integrated into a whole and disposed in the mounting box 36, facilitating the mounting of the whole. In an example, the mounting box 36 is rectangular.

In some examples, the electromagnetic interference suppression circuit board 31 is configured to be a single-board structure. Of course, in other examples, the electromagnetic interference suppression circuit board 31 may be configured to be a multi-board structure as required. In some examples, the electromagnetic interference suppression circuit board 31 is disposed along a direction parallel to an extension direction of the grip 704. In some parallel examples, the electromagnetic interference suppression circuit board 31 is inclined relative to the extension direction of the grip 704. In some examples, the resistor 33 is a power negative temperature coefficient (NTC) resistor 33, and the inductor 34 is a common-mode choke 34.

In some examples, the electromagnetic interference suppression device 30 is disposed in the first mounting cavity 705 and independent of the control assembly 20. Thus, apertures in the first mounting cavity 705 are more reasonably utilized so that the electromagnetic interference suppression device 30 and the control assembly 20 are easier to assemble. In an example, the electromagnetic interference suppression device 30 is disposed in the first mounting cavity 705 of the grip housing 70 or the motor housing 710. In another example, the electromagnetic interference suppression device 30 is disposed in the second mounting cavity of the output housing 77.

In some examples, the cooling fan 73 is located between the brushless electric motor 71 and the electromagnetic interference suppression device 30. Thus, more heat dissipation airflows flow towards the brushless electric motor 71 and the electromagnetic interference suppression device 30, helping improve the heat dissipation effects of the brushless electric motor 71 and the electromagnetic interference suppression device 30.

In some examples, with continued reference to FIG. 3, a second heat dissipation air path 707 is formed in the first mounting cavity 705 or the second mounting cavity, which is configured to dissipate heat from the electromagnetic interference suppression device 30. Thus, the heat dissipation effect of the electromagnetic interference suppression device 30 can be improved.

In some examples, to form an inlet of the second heat dissipation air path 707, with continued reference to FIG. 15, a second air inlet 703 is provided on the grip housing 70, motor housing 710, or output housing 77. Two air inlets, the first air inlet 702 and the second air inlet 703, help improve the heat dissipation effects. In an example, the grip housing 70, motor housing 710, or output housing 77 is provided with the second air inlet 703 directly facing the electromagnetic interference suppression device 30. In some examples, multiple second air inlets 703 are provided and arranged side by side to increase an air intake volume. In an example, two sets of second air inlets 703 are provided, the two sets of second air inlets 703 are provided on the left side and the right side of the power tool, respectively, and each set of second air inlets 703 includes at least one second air inlet 703.

It is to be noted that in the examples of the present application, the first heat dissipation air path 706 and the second heat dissipation air path 707 share the air outlet 701 so that both the first heat dissipation air path 706 and the second heat dissipation air path 707 pass through the brushless electric motor 71, so as to further improve the heat dissipation effect of the brushless electric motor 71. Of course, in other examples, the first heat dissipation air path 706 and the second heat dissipation air path 707 may have respective air outlets 701 independent of each other.

To limit the flow directions of heat dissipation airflows in the first mounting cavity 705 or the second mounting cavity, with continued reference to FIG. 15, air guide ribs 708 are formed on an inner wall surface of the grip housing 70, motor housing 710, or output housing 77, and the air guide ribs 708 extend along paths required by the first heat dissipation air path 706 and the second heat dissipation air path 707. It is to be noted that the number of air guide ribs 708 may be flexibly set as required and is not limited here.

The power tool further includes the alternating current input line (not shown in the figures). The electromagnetic interference suppression device 30 and the control assembly 20 are located on different sides of the brushless electric motor 71, and the alternating current input line extends into the first mounting cavity 705 or the second mounting cavity and is disposed close to the electromagnetic interference suppression device 30. Thus, the alternating current input line is routed reasonably, helping improve the neatness of wires in the power tool and reduce a difficulty of future maintenance.

In an example, a through hole for the alternating current input line to pass through is formed on the housing of the grip housing 70 that forms the first mounting cavity 705. When the user holds the grip 704 and operates the power tool, the through hole and the alternating current input line in the through hole are located below the grip 704 so that the alternating current input line is located below the grip 704.

In some examples, the overall weight of the power tool is less than or equal to 3.2 kg. In an example, the overall weight of the power tool is 3.2 kg. In an example, the overall weight of the power tool is 3 kg. In an example, the overall weight of the power tool is 2.8 kg. In an example, the overall weight of the power tool is 2.6 kg. In an example, the overall weight of the power tool is 2.5 kg.

In an example, the grinding tool is a wall sander. It is to be noted that the above limitations on the power tool are also applicable to the grinding tool and thus are not repeated here.

## Claims

1. A pole power tool, comprising:
a grip (704) for a user to hold;
a brushless electric motor (71) comprising a motor shaft (711) movable around a motor axis (712); and
a control assembly (20) configured to control operation of the brushless electric motor and comprising a circuit board assembly (21) and a circuit element (22);
**characterized in that**
at least a first plane P exists, the first plane P passes through the circuit board assembly of the control assembly and the motor axis of the brushless electric motor, the first plane P intersects the circuit board assembly along a first line segment AB, and a projection of the first line segment AB on the motor axis at least partially falls on the motor shaft;
the pole power tool further comprises a grip housing (70) and an output housing (77), wherein the grip is formed on the grip housing, the output housing is connected to a working attachment (72) for operation, and the grip housing and the output housing are separately provided;
wherein
the grip housing is formed with or connected to a first mounting cavity (705), and the brushless electric motor and the control assembly are mounted in the first mounting cavity; or
the output housing is formed with a second mounting cavity, and the brushless electric motor and the control assembly are mounted in the second mounting cavity;
wherein a first heat dissipation air path (706) is formed in the pole power tool, the first heat dissipation air path passes through a surface of the control assembly, and the first heat dissipation air path dissipates heat from both the brushless electric motor and the control assembly.

2. The pole power tool according to claim 1, wherein a parting plane P1 is defined, wherein the parting plane P1 passes through the grip housing, and the grip housing is distributed symmetrically about the parting plane P1; a second plane P2 is defined, wherein the second plane P2 is perpendicular to the parting plane P1 and passes through the motor axis; and a projection of the control assembly on the second plane P2 at least partially overlaps a projection of the brushless electric motor on the second plane P2.

3. The pole power tool according to claim 1, wherein the first heat dissipation air path flows through a gap between the brushless electric motor and the control assembly and air gaps of the brushless electric motor and flows out of the brushless electric motor.

4. The pole power tool according to claim 1, further comprising an electromagnetic interference suppression device (30) configured to suppress electromagnetic interference, disposed in the grip housing or the output housing, and being independent of the control assembly, wherein a second heat dissipation air path (707) exists, which is configured to dissipate heat from the electromagnetic interference suppression device.

5. The pole power tool according to claim 1, further comprising a cooling fan (73) connected to the motor shaft of the brushless electric motor, wherein the grip housing is formed with an air outlet (701) directly facing the cooling fan;
the grip housing is formed with a first air inlet (702) directly facing the control assembly; and/or
the pole power tool further comprises an electromagnetic interference suppression device, and the grip housing is formed with a second air inlet (703) directly facing the electromagnetic interference suppression device.

6. The pole power tool according to claim 1, wherein a human-machine interaction structure (74) is formed on the grip housing, and the human-machine interaction structure comprises a speed control button for controlling a rotational speed of the motor shaft of the brushless electric motor.

7. The pole power tool according to claim 6, wherein the speed control button comprises an acceleration button (741) for controlling the motor shaft to increase in speed and a deceleration button (742) for controlling the motor shaft to decrease in speed; and/or
the human-machine interaction structure further comprises a gear indicator light (743) for indicating a speed gear of the pole power tool.

8. The pole power tool according to claim 1, wherein the circuit element comprises at least one of an electronic switch (221), a rectifier (222), and a first capacitor (223); the circuit board assembly comprises at least one circuit board (211);
a plurality of electronic switches are provided and arranged in rows and columns on the at least one circuit board; and/or
a plurality of first capacitors are provided and arranged side by side on the at least one circuit board.

9. The pole power tool according to claim 1, further comprising a cooling fan connected to the motor shaft of the brushless electric motor and an electromagnetic interference suppression device, wherein the cooling fan is located between the brushless electric motor and the electromagnetic interference suppression device.

10. The pole power tool according to claim 1, wherein maximum overload power of the brushless electric motor is greater than or equal to 200 W and less than or equal to 2000 W; and/or
rated power of the brushless electric motor is greater than or equal to 400 W and less than or equal to 2000 W; and/or
an outer diameter of the brushless electric motor is greater than or equal to 30 mm and less than or equal to 90 mm; and/or
a stack length of stator laminations of the brushless electric motor is greater than or equal to 15 mm and less than or equal to 45 mm; and/or
a weight of the brushless electric motor is greater than or equal to 100 g and less than or equal to 800 g.

11. The pole power tool according to claim 1, wherein when the motor shaft is horizontally disposed, the control assembly is located above the brushless electric motor, and a heat dissipation gap through which a heat dissipation airflow flows is formed between the control assembly and the brushless electric motor.

## Patentansprüche

1. Ein Stangen-Elektrowerkzeug, umfassend:
einen Griff (704) zum Halten durch einen Benutzer;
einen bürstenlosen Elektromotor (71), der eine Motorwelle (711) umfasst, die um eine Motorachse (712) drehbar ist; und
eine Steueranordnung (20), die dazu ausgebildet ist, den Betrieb des bürstenlosen Elektromotors zu steuern und eine Leiterplattenanordnung (21) und ein Schaltungselement (22) umfasst;
**dadurch gekennzeichnet, dass**
zumindest eine erste Ebene P vorhanden ist, wobei die erste Ebene P durch die Leiterplattenanordnung der Steueranordnung und die Motorachse des bürstenlosen Elektromotors verläuft, die erste Ebene P die Leiterplattenanordnung entlang eines ersten Liniensegments AB schneidet, und eine Projektion des ersten Liniensegments AB auf die Motorachse zumindest teilweise auf die Motorwelle fällt;
das Stangen-Elektrowerkzeug ferner ein Griffgehäuse (70) und ein Abtriebsgehäuse (77) umfasst, wobei der Griff an dem Griffgehäuse ausgebildet ist, das Abtriebsgehäuse mit einem Arbeitsvorsatz (72) zum Betrieb verbunden ist, und das Griffgehäuse und das Abtriebsgehäuse getrennt bereitgestellt sind;
wobei
das Griffgehäuse mit einem ersten Montagehohlraum (705) ausgebildet oder mit einem ersten Montagehohlraum (705) verbunden ist, und der bürstenlose Elektromotor und die Steueranordnung in dem ersten Montagehohlraum montiert sind; oder
das Abtriebsgehäuse mit einem zweiten Montagehohlraum ausgebildet ist, und der bürstenlose Elektromotor und die Steueranordnung in dem zweiten Montagehohlraum montiert sind;
wobei in dem Stangen-Elektrowerkzeug ein erster Wärmeableitungsluftweg (706) ausgebildet ist, der erste Wärmeableitungsluftweg über eine Oberfläche der Steueranordnung verläuft, und der erste Wärmeableitungsluftweg Wärme sowohl von dem bürstenlosen Elektromotor als auch von der Steueranordnung ableitet.

2. Das Stangen-Elektrowerkzeug nach Anspruch 1, wobei eine Trennebene P1 definiert ist, wobei die Trennebene P1 durch das Griffgehäuse verläuft, und das Griffgehäuse symmetrisch bezüglich der Trennebene P1 verteilt ist; eine zweite Ebene P2 definiert ist, wobei die zweite Ebene P2 senkrecht zu der Trennebene P1 ist und durch die Motorachse verläuft; und eine Projektion der Steueranordnung auf die zweite Ebene P2 zumindest teilweise eine Projektion des bürstenlosen Elektromotors auf die zweite Ebene P2 überlappt.

3. Das Stangen-Elektrowerkzeug nach Anspruch 1, wobei der erste Wärmeableitungsluftweg durch einen Spalt zwischen dem bürstenlosen Elektromotor und der Steueranordnung und Luftspalte des bürstenlosen Elektromotors strömt und aus dem bürstenlosen Elektromotor ausströmt.

4. Das Stangen-Elektrowerkzeug nach Anspruch 1, ferner umfassend eine Vorrichtung (30) zur Unterdrückung elektromagnetischer Störungen, die dazu ausgebildet ist, elektromagnetische Störungen zu unterdrücken, in dem Griffgehäuse oder dem Abtriebsgehäuse angeordnet ist und von der Steueranordnung unabhängig ist, wobei ein zweiter Wärmeableitungsluftweg (707) vorhanden ist, der dazu ausgebildet ist, Wärme von der Vorrichtung zur Unterdrückung elektromagnetischer Störungen abzuleiten.

5. Das Stangen-Elektrowerkzeug nach Anspruch 1, ferner umfassend einen Kühlventilator (73), der mit der Motorwelle des bürstenlosen Elektromotors verbunden ist, wobei das Griffgehäuse mit einem Luftauslass (701) ausgebildet ist, der direkt dem Kühlventilator zugewandt ist;
das Griffgehäuse mit einem ersten Lufteinlass (702) ausgebildet ist, der direkt der Steueranordnung zugewandt ist; und/oder
das Stangen-Elektrowerkzeug ferner eine Vorrichtung zur Unterdrückung elektromagnetischer Störungen umfasst, und das Griffgehäuse mit einem zweiten Lufteinlass (703) ausgebildet ist, der direkt der Vorrichtung zur Unterdrückung elektromagnetischer Störungen zugewandt ist.

6. Das Stangen-Elektrowerkzeug nach Anspruch 1, wobei an dem Griffgehäuse eine Mensch-Maschine-Interaktionsstruktur (74) ausgebildet ist, und die Mensch-Maschine-Interaktionsstruktur eine Drehzahlsteuerungstaste zum Steuern einer Drehzahl der Motorwelle des bürstenlosen Elektromotors umfasst.

7. Das Stangen-Elektrowerkzeug nach Anspruch 6, wobei die Drehzahlsteuerungstaste eine Beschleunigungstaste (741) zum Steuern der Motorwelle, ihre Drehzahl zu erhöhen, und eine Verzögerungstaste (742) zum Steuern der Motorwelle, ihre Drehzahl zu verringern, umfasst; und/oder
die Mensch-Maschine-Interaktionsstruktur ferner eine Drehzahlstufenanzeigeleuchte (743) zum Anzeigen einer Drehzahlstufe des Stangen-Elektrowerkzeugs umfasst.

8. Das Stangen-Elektrowerkzeug nach Anspruch 1, wobei das Schaltungselement mindestens eines von einem elektronischen Schalter (221), einem Gleichrichter (222) und einem ersten Kondensator (223) umfasst; die Leiterplattenanordnung mindestens eine Leiterplatte (211) umfasst;
eine Mehrzahl elektronischer Schalter vorgesehen und in Reihen und Spalten auf der mindestens einen Leiterplatte angeordnet sind; und/oder
eine Mehrzahl erster Kondensatoren vorgesehen und nebeneinander auf der mindestens einen Leiterplatte angeordnet sind.

9. Das Stangen-Elektrowerkzeug nach Anspruch 1, ferner umfassend einen Kühlventilator, der mit der Motorwelle des bürstenlosen Elektromotors verbunden ist, und eine Vorrichtung zur Unterdrückung elektromagnetischer Störungen, wobei der Kühlventilator zwischen dem bürstenlosen Elektromotor und der Vorrichtung zur Unterdrückung elektromagnetischer Störungen angeordnet ist.

10. Das Stangen-Elektrowerkzeug nach Anspruch 1, wobei eine maximale Überlastleistung des bürstenlosen Elektromotors größer als oder gleich 200 W und kleiner als oder gleich 2000 W ist; und/oder
eine Nennleistung des bürstenlosen Elektromotors größer als oder gleich 400 W und kleiner als oder gleich 2000 W ist; und/oder
ein Außendurchmesser des bürstenlosen Elektromotors größer als oder gleich 30 mm und kleiner als oder gleich 90 mm ist; und/oder
eine Stapellänge von Statorblechen des bürstenlosen Elektromotors größer als oder gleich 15 mm und kleiner als oder gleich 45 mm ist; und/oder
ein Gewicht des bürstenlosen Elektromotors größer als oder gleich 100 g und kleiner als oder gleich 800 g ist.

11. Das Stangen-Elektrowerkzeug nach Anspruch 1, wobei, wenn die Motorwelle horizontal angeordnet ist, die Steueranordnung oberhalb des bürstenlosen Elektromotors angeordnet ist, und ein Wärmeableitungsspalt, durch den ein Wärmeableitungsluftstrom strömt, zwischen der Steueranordnung und dem bürstenlosen Elektromotor ausgebildet ist.

## Revendications

1. Un outil électrique sur perche, comprenant :
une poignée (704) destinée à être tenue par un utilisateur ;
un moteur électrique sans balais (71) comprenant un arbre moteur (711) rotatif autour d'un axe moteur (712) ; et
un ensemble de commande (20) configuré pour commander le fonctionnement du moteur électrique sans balais et comprenant un ensemble de cartes de circuit (21) et un élément de circuit (22) ;
**caractérisé en ce que**
au moins un premier plan P existe, le premier plan P passe à travers l'ensemble de cartes de circuit de l'ensemble de commande et l'axe moteur du moteur électrique sans balais, le premier plan P intersecte l'ensemble de cartes de circuit le long d'un premier segment de ligne AB, et une projection du premier segment de ligne AB sur l'axe moteur tombe au moins partiellement sur l'arbre moteur ;
l'outil électrique sur perche comprend en outre un boîtier de poignée (70) et un boîtier de sortie (77), dans lequel la poignée est formée sur le boîtier de poignée, le boîtier de sortie est connecté à un accessoire de travail (72) pour le fonctionnement, et le boîtier de poignée et le boîtier de sortie sont prévus séparément ;
dans lequel
le boîtier de poignée est formé avec ou connecté à une première cavité de montage (705), et le moteur électrique sans balais et l'ensemble de commande sont montés dans la première cavité de montage ; ou
le boîtier de sortie est formé avec une deuxième cavité de montage, et le moteur électrique sans balais et l'ensemble de commande sont montés dans la deuxième cavité de montage ;
dans lequel un premier trajet d'air de dissipation thermique (706) est formé dans l'outil électrique sur perche, le premier trajet d'air de dissipation thermique passe à travers une surface de l'ensemble de commande, et le premier trajet d'air de dissipation thermique dissipe la chaleur à la fois du moteur électrique sans balais et de l'ensemble de commande.

2. L'outil électrique sur perche selon la revendication 1, dans lequel un plan de joint P1 est défini, dans lequel le plan de joint P1 passe à travers le boîtier de poignée, et le boîtier de poignée est réparti symétriquement par rapport au plan de joint P1 ; un deuxième plan P2 est défini, dans lequel le deuxième plan P2 est perpendiculaire au plan de joint P1 et passe à travers l'axe moteur ; et une projection de l'ensemble de commande sur le deuxième plan P2 recouvre au moins partiellement une projection du moteur électrique sans balais sur le deuxième plan P2.

3. L'outil électrique sur perche selon la revendication 1, dans lequel le premier trajet d'air de dissipation thermique circule à travers un espace entre le moteur électrique sans balais et l'ensemble de commande et des entrefers du moteur électrique sans balais et s'écoule hors du moteur électrique sans balais.

4. L'outil électrique sur perche selon la revendication 1, comprenant en outre un dispositif de suppression d'interférences électromagnétiques (30) configuré pour supprimer des interférences électromagnétiques, disposé dans le boîtier de poignée ou le boîtier de sortie, et étant indépendant de l'ensemble de commande, dans lequel un deuxième trajet d'air de dissipation thermique (707) existe, lequel est configuré pour dissiper la chaleur du dispositif de suppression d'interférences électromagnétiques.

5. L'outil électrique sur perche selon la revendication 1, comprenant en outre un ventilateur de refroidissement (73) connecté à l'arbre moteur du moteur électrique sans balais, dans lequel le boîtier de poignée est formé avec une sortie d'air (701) faisant directement face au ventilateur de refroidissement ;
le boîtier de poignée est formé avec une première entrée d'air (702) faisant directement face à l'ensemble de commande ; et/ou
l'outil électrique sur perche comprend en outre un dispositif de suppression d'interférences électromagnétiques, et le boîtier de poignée est formé avec une deuxième entrée d'air (703) faisant directement face au dispositif de suppression d'interférences électromagnétiques.

6. L'outil électrique sur perche selon la revendication 1, dans lequel une structure d'interaction homme-machine (74) est formée sur le boîtier de poignée, et la structure d'interaction homme-machine comprend un bouton de commande de vitesse pour commander une vitesse de rotation de l'arbre moteur du moteur électrique sans balais.

7. L'outil électrique sur perche selon la revendication 6, dans lequel le bouton de commande de vitesse comprend un bouton d'accélération (741) pour commander l'arbre moteur à augmenter en vitesse et un bouton de décélération (742) pour commander l'arbre moteur à diminuer en vitesse ; et/ou
la structure d'interaction homme-machine comprend en outre un voyant indicateur de rapport de vitesse (743) pour indiquer un rapport de vitesse de l'outil électrique sur perche.

8. L'outil électrique sur perche selon la revendication 1, dans lequel l'élément de circuit comprend au moins l'un parmi un commutateur électronique (221), un redresseur (222), et un premier condensateur (223) ; l'ensemble de cartes de circuit comprend au moins une carte de circuit (211) ;
une pluralité de commutateurs électroniques sont prévus et agencés en lignes et en colonnes sur ladite au moins une carte de circuit ; et/ou
une pluralité de premiers condensateurs sont prévus et agencés côte à côte sur ladite au moins une carte de circuit.

9. L'outil électrique sur perche selon la revendication 1, comprenant en outre un ventilateur de refroidissement connecté à l'arbre moteur du moteur électrique sans balais et un dispositif de suppression d'interférences électromagnétiques, dans lequel le ventilateur de refroidissement est situé entre le moteur électrique sans balais et le dispositif de suppression d'interférences électromagnétiques.

10. L'outil électrique sur perche selon la revendication 1, dans lequel une puissance maximale de surcharge du moteur électrique sans balais est supérieure ou égale à 200 W et inférieure ou égale à 2000 W ; et/ou
une puissance nominale du moteur électrique sans balais est supérieure ou égale à 400 W et inférieure ou égale à 2000 W ; et/ou
un diamètre extérieur du moteur électrique sans balais est supérieur ou égal à 30 mm et inférieur ou égal à 90 mm ; et/ou
une longueur d'empilage de tôles de stator du moteur électrique sans balais est supérieure ou égale à 15 mm et inférieure ou égale à 45 mm ; et/ou
un poids du moteur électrique sans balais est supérieur ou égal à 100 g et inférieur ou égal à 800 g.

11. L'outil électrique sur perche selon la revendication 1, dans lequel, lorsque l'arbre moteur est disposé horizontalement, l'ensemble de commande est situé au-dessus du moteur électrique sans balais, et un espace de dissipation thermique à travers lequel circule un flux d'air de dissipation thermique est formé entre l'ensemble de commande et le moteur électrique sans balais.
